# EUROPEAN PATENT SPECIFICATION

(11) **EP 1 256 727 B1**
(45) Date of publication and mention of the grant of the patent: **17.01.2007**
(21) Application number: 01111600.1
(22) Date of filing: 12.05.2001
(51) Int. Cl.: F04D 29/58, F04D 13/06, B67D 1/10

(54) **Motor-driven pump**
Motorpumpenaggregat
Groupe motopompe

(43) Date of publication of application: 13.11.2002
(73) Proprietor: SAMEC s.n.c., 33170 Pordenone (IT)
(72) Inventor: Bergamo, Andrea, 33170 Pordenone (IT); Bergamo, Stefano, 33170 Pordenone (IT)
(74) Representative: Petraz, Gilberto Luigi

(56) References cited:
- DE-A- 19 917 420
- GB-A- 2 009 907
- GB-A- 2 152 011
- US-A- 3 127 530
- US-A- 4 213 498
- US-A- 4 610 145
- US-A- 4 854 373

## Description

### Field of the invention

The present invention relates to a motor-driven pump, comprising an electric motor for a cooled liquid circulation, a first hydraulic circuit for temperature control of drink distribution systems or of machine tools as well as of household or industrial services, a second hydraulic circuit being provided for motor temperature control.

### Background of the invention

Motor-driven pumps were often up to now cooled by an electric fan settled in correspondence of an end of the pump. Due to excessive volume of fan and its cover as well as to a relevant noise, a double cooling function is now frequently exerted by cooling liquid, which is circulated by motor- driven pump. A first function of cooling liquid is to assure an optimal temperature of drinks to be broached even in correspondence of first broach, whereas a second function of cooling liquid is to assure that stator of electric motor connected to pump is involved in cooling process.

In addition it is point out that diffusion of drink distribution automatic devices is strictly connected to a similar diffusion of motor-driven pumps. At present any bar, family or sport, industrial ambients are equipped with drink (beer, coca-cola, wine, etc.) distribution systems.

GB-A-2009907 discloses a drink dispensing apparatus for dispensing cold drinks formed by mixing water with a regulated quantity of fruit juice concentrate immediately before the drink is dispensed. The apparatus comprises a heat exchanger which includes an evaporation coil of a refrigerator, a water coil for the drinking water supply and a recirculating coil for a water supply to a chilled water receptacle within which a container for the fruit juice concentrate is located so that the refrigerator cools both the drinking water and the recirculating water which in turn cools the fruit juice concentrate. The three coils in the heat exchanger are arranged one inside another and embedded in polyurethane foam.

US-A-4,854,373 discloses a crescent shaped exchanger tank which is fitted over the top portion of an electric motor which drives a centrifugal pump. The inlet to the pump is connected to a drain on a bath tub and the discharge of the pump is connected to jet nozzles along the sides of the tub. The heat exchanger has an inlet connected to the high pressure side of the pump and a discharge connected to low pressure or suction side of the pump. The heat of the motor heats the water circulated in the tank to warm the water delivered through the jet nozzles to the tub.

### Summary of the invention

Motor-driven pumps, which circulating cooling liquid, should be of dimensionally reduced size, to have low production costs, to provide reliable cooling devices of broached drinks, as well as reliable motor stator cooling systems and a substantially protection against ambient humidity.

Therefore one of the most interesting problems of such motor-drivent pumps is represented by electric motor cooling, as drink cooling process is obtained thanks to extremely reliable traditional solutions.

The solution, which is generally provided for electric motor cooling process, is obtained (after eliminating a fan) thanks to a metal (usually copper) or plastic pipe, which should be put close to motor stator and which should control its temperature by means a U-shaped development. Accordingly the most room occupied by fan and cover room is saved.

Requirements, which should be met by motor-driven pumps, are:
- cooling process of broached drinks
- economical and reliable cooling process of electric motor stator
- as small as possible room of a motor-driven pump
- saving electrical energy
- a substantial noiselessness
- a substantial protection against ambient humidity

It is to be pointed out that many motor-driven pumps, which are available in the market, engage an excessive room, because they are provided with fin obtained on external motor frame, whereas different embodiments are provided with cooling pipes, which are arranged on the external stator frame. Consequences are given by a not reliable motor cooling process as well as an oversized pump.

A first problem, which motor-driven pump according to the invention intends to solve is given by reduction of oversized dimensions of pump. Such a problem is solved by the motor-driven pump according to the invention, which is characterized in that said second plastic or metal hydraulic circuit is directly arranged close to electric motor stator by means of a U-shaped pipe and of its adherent means to said stator.

A second problem is given by a reliable cooling process of motor stator. Said problem is solved by motor-driven pump according to the invention, which is characterized in that said adherent means are made of a metal or plastic clamp, which ensures substantial adherence to motor stator of said second hydraulic circuit and which is adapted to gauge a substantial adherence to motor stator of second hydraulic circuit thanks to its height, which could arrive to a complete total stator thickness, said U-shaped pipe being provided with at least two developments arranged on the same stator side or arranged a first on a side and the other on a opposite side of stator.
A third problem is given by means, which could ensure a substantial protection against ambient humidity of electric motor. Said problem is solved by motor-driven pump according to the invention, which is characterized by overinjections means, which are adapted to cover substantially entire electric motor surface as well as to ensure a substantial noiselessness of operating motor-driven pump.

### Brief description of drawings

Said and further characteristics will be apparent from the following description and the alleged drawings, where:
Figs. La, 1b represent respectively a schematic front section of cooling device of a motor-driven pump and an operating scheme of said cooling process;
Figs. 2a, 2b represent respectively a plant section view and a front view of a first embodiment of electric motor stator in a motor-driven pump;
Figs. 3a, 3b, 3c represent respectively a plant section view, a front view of a second embodiment of electric motor stator and an operating scheme of a motor-driven pump;
Figs. 4a, 4b, 4c represent respectively a plant section view, a front view of a third embodiment of electric motor stator and an operating scheme of a motor-driven pump.

### DESCRIPTION OF SOME PREFERRED EMBODIMENTS

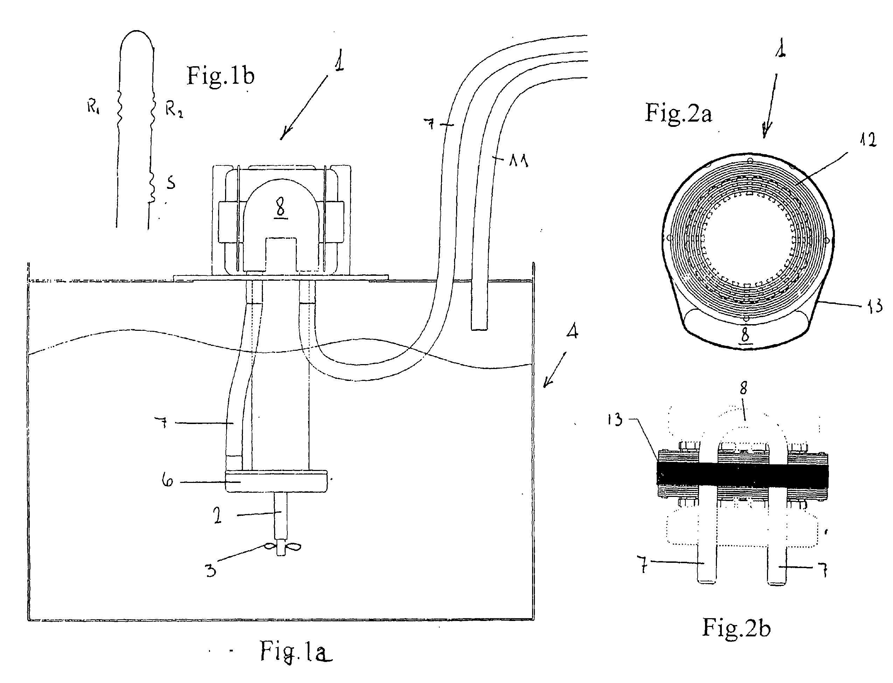

A first embodiment of a motor-driven pump is represented in Figs. 1a,1b. It comprises a motor 1, its shaft 2, which is connected to a propeller 3. Said propeller is adapted to mix liquid (usually water, which is cooled by a cooling circuit not represented in the drawings) contained in a tank 4. Shaft is adapted to turn an impeller 6, which makes cooled liquid flow from tank 4 through a delivery pipe 7 and then, through a U-shaped development 8, makes cooled liquid flow to a drink distribution device (or similar different services), which are not represented in the drawings.

Delivery pipe 7 presents a first development R₁, which provides a first cooling effect on motor 1, whereas after U-shaped, development 8, the same pipe 7 exerts a second cooling effect R₂ on motor
1. Then cooled liquid exerts its cooling service S on drinks, which could be broached and then it returns by means of a return pipe 11 into tank 4. Pipe 7 represents together with S service a first hydraulic circuit for temperature control, for instance, of drink distribution service or of machine tools as well as of household or industrial services; in addition it represents with developments R₁ and R₂ a second U-shaped hydraulic circuit, which is provided for motor temperature control of pump.

Indeed it is well known that the main service offered by a motor-driven pump is to control temperature of drinks to be broached as well as their portions, which stay immediately close to faucet. Such a result is obtained thanks to an insulating sleeve, which is called in jargon "python" not represented in the drawings. Said sleeve is adapted to contain pipes, which are connecting containers of various drinks with faucet, which said drinks should be broached from. Said pipes are in touch with pipe 7 of developments R₁, R₂ and in touch with pipe 11, which makes cooling liquid return into tank 4.

Accordingly optimal cooling process of drinks is obtained even as soon as drinks are broached as level of drink temperature is assured at level of optimal values of drinks to be drunken.
Figs 2a, 2b represent a first embodiment of motor-driven pump according to the invention, where developments R₁, R₂ of pipe 7 are settled in touch with a stator 12 of motor 1 and substantially close each to other, i.e. in the same side of said stator. Developments R₁, R₂ are kept adherent to stator by means of a clamp 13 so that cooling liquid could produce best cooling effect on motor 1.

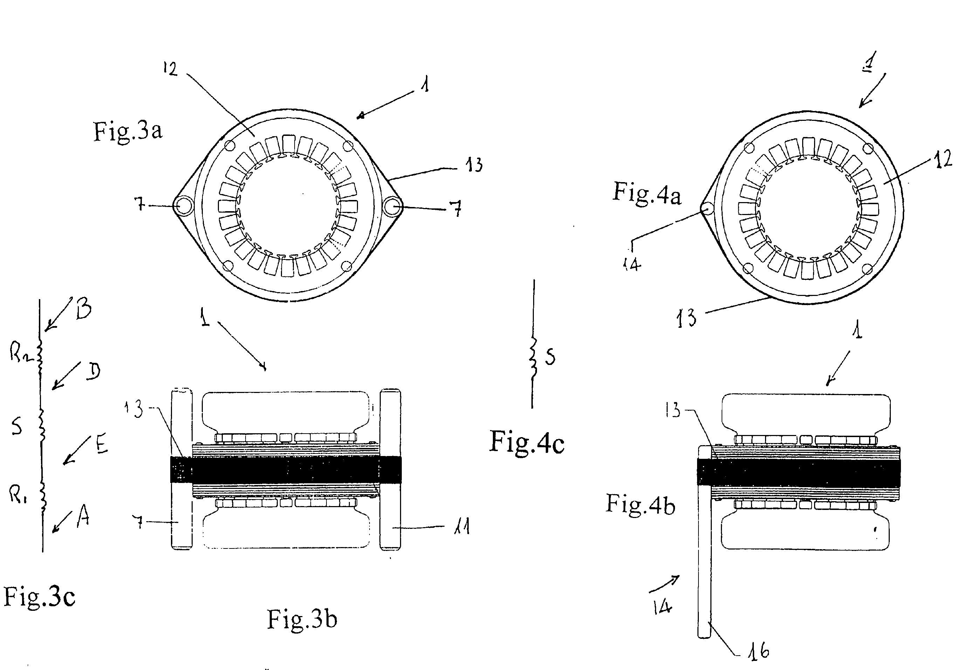

According to a second embodiment of described motor-driven pump (Figs. 3a, 3b, 3c), delivery pipe 7 is kept adherent to motor stator together with pipe 11 thanks to clamp 13 (Fig. 3b). Cooling process of drink portions, which are contained in pipes staying into "python", is satisfied before motor 1 stator is cooled by pipe 11 due to liquid, which is flowing towards tank 4. Pipe 11 is now settled diametrically opposite on motor stator with respect to pipe 7 (Fig. 3a). Pipes 7, 11 are always settled adherent to motor stator by means of clamp 13.

First as well as second embodiment ensure electric motor temperature substantial control in motor-driven pump and therefore avoid danger of its overheating. In addition second hydraulic circuit, which would cool motor stator, is represented by a first development A of delivery pipe 7 and by a second development B of pipe 11, whereas first hydraulic circuit, which would cool services S is represented by second development E of pipe 7 and by first development D of pipe 11, developments E, D being contained into "python".

A third embodiment, which should assure electric motor temperature control, is directed towards an extension 14. This latter can be made of one or more metal empty pipes or one or more metal straps.
Fig. 4b shows just one extension 14. In any case. It is assured adherent to motor 1 stator by means of clamp 13 and its lower end 16 is immersed into liquid of tank 4. Fig. 4c shows that just first hydraulic circuit is present, which cools pipes contained in the "python", whereas second hydraulic circuit is eliminated by presence of extension(s) 14.

Laboratory tests confirmed a quite satisfying cooling result of motor 1 stator, due to extension(s) 14.

It is to be pointed out that two different types of motor-driven pumps are basically present on the market, which should control drink as well as machine tool temperature. A first type is represented by a motor-driven pump, which is operated by a shielded-pole electric motor without any clamp 13 and where R₁, R₂ developments are inserted into stator. Such a motor-driven pump is directed to modest total head and flow-rate performance.

A second type of motor-driven pump is characterized by 18-24 m. total head and by 12-26 liters/min. flow-rate, and provides three-phase electric motor or mono-phase electric motors with condenser. Said motors are usually cooled by means of forced ventilation of a metal external frame, which is provided with fins.

It's well known that forced ventilation substantially increases motor-driven dimensions, partially absorbes motor power and, last but not least, it can't be used when motor-driven pump is coated with overinjected thermoplastic or resin material. In addition forced ventilation is troublesomely noisy. Otherwise thermoplastic or resin material coating increase danger of electric motor overheating, whereby a reliable solution is necessary, which assures elimination of heat, which is produced whenever motor-driven pump is operating.

Motor-driven pump according to invention provides elimination both of forced ventilation and cover with advantage of reduced machine dimensions as well as electric winding coated with thermoplastic or resin material. A double result is obtained: protection against humidity and noise.

A solution is provided, which assures a reliable motor cooling process, where no fan is present and where thermoplastic or resin material coating is overinjected.

Such a solution eliminates external frame with fins, whereas motor stator is directly in touch (Figs. 2, 3) with R₁, R₂ developments, which provide a cooling effect of electric motor thanks to clamp 13, which intervenes also in the embodiment represented in Fig. 4, where just extension 14 is present.

Motor-driven pump according to invention eliminates:
- fan and cover with advantage of dimensions, which are decreased and with advantage of full exploitation of motor power;
- external frame of electric motor and fins, which are required when cooling process involves forced ventilation;
- danger, which is due to ambient humidity , thanks to over-injection process with thermoplastic material or resin,
whereas it assures a quite interesting result because:
- it assures a cooling effect of electric motor by means of pipes 7, 11 of second hydraulic circuit, or by means of extension 14, which assures transfer towards electric motor stator of its cooling effect;
- protects motor against ambient humidity, whenever motor is operating, thanks to overinjection process with plastic material or resin, which are coating electric winding of motor;
- motor-driven pump is now substantially noiseless, due to overinjection process;
- a substantially cooling process of drinks to be broached is assured, due to the fact that cooling liquid, after controlling stator temperature, provides to cool pipes, which are into "python" and which are connected to containers of drinks;
- the embodiment of Fig. 4 shows that cooling effect of liquid contained in tank 4 is substantially directed to cool pipes into "python".

## Claims

1. A motor-driven pump, comprising an electric motor (1) for a cooled liquid circulation, a first hydraulic circuit which includes a delivery pipe (7) for temperature control of drink distribution systems or of machine tools as well as of household or industrial services (S), and a second hydraulic circuit for temperature control of said electric motor (1), **characterized in that** said second hydraulic circuit comprises a metal U-shaped pipe (8) which is connected to said delivery pipe (7) and is directly arranged close to the stator (12) of said electric motor (1) and kept adherent to said stator (12) by adherent means (13).

2. Motor-driven pump according to Claim 1, **characterized in that** said adherent means are made of a metal clamp (13), which ensures substantial adherence of said U-shaped pipe (8) to said motor stator (12) thanks to its height, which could arrive to complete total stator thickness, said U-shaped pipe (8) being provided with at least two developments (R₁, R₂) arranged on the same stator (12) side or arranged a first on a side and the other on a opposite side.

3. Motor-driven pump according to Claims 1 or 2, **characterized by** overinjections means, which are adapted to cover substantially the entire surface of said electric motor (1) in order to ensure a substantial protection of said electric motor (1) against ambient humidity and a substantial noiselessness of said operating motor-driven pump.

## Patentansprüche

1. Motorbetriebene Pumpe, umfassend einen Elektromotor (1) für einen Kreislauf einer gekühlten Flüssigkeit, einen ersten Hydraulikkreis, der eine Ableitung (7) für eine Temperatursteuerung eines Getränkeverteilungssystems oder von Maschinenwerkzeugen sowie von Haushalts- oder industriellen Diensten (S), und einen zweiten Hydraulikkreis für eine Temperatursteuerung des Elektromotors (1), **gekennzeichnet dadurch, dass** der zweite Hydraulikkreis ein metallische, U-förmige Leitung (8) umfasst, welche mit der Ableitung (7) verbunden ist und direkt nahe dem Stator (12) des Elektromotors (1) angeordnet ist, und anhaftend an dem Stator (12) durch Anhaftmittel (13) gehalten ist.

2. Motorbetriebene Pumpe gemäß Anspruch 1, **dadurch gekennzeichnet, dass** das Anhaftmittel aus einer Metallklemme (13) hergestellt ist, welche im Wesentlichen das Anhaften der U-förmigen Leitung (8) an dem Motorstator (12) aufgrund deren Höhe sicherstellt, welche eine komplette Gesamtdicke des Stators erreichen kann, wobei die U-förmige Verbindung (8) mit zumindest zwei Aufbauten (R₁, R₂) versehen ist, die auf der gleichen Seite des Stators (12) angeordnet sind, oder einer an einer ersten Seite und der andere an einer gegenüberliegenden Seite angeordnet sind.

3. Motorbetrieben Pumpe gemäß Anspruch 1 oder 2, **gekennzeichnet durch** ein Spritzgießmittel (*overinjections means*), welches ausgebildet ist, im Wesentlichen die gesamte Oberfläche des Elektromotors (1) abzudecken, um einen wesentlichen Schutz des Elektromotors (1) gegen Umgebungsfeuchte und im Wesentlichen eine Geräuschlosigkeit der in Betrieb befindlichen motorbetriebenen Pumpe zu gewährleisten.

## Revendications

1. Groupe motopompe comportant un moteur électrique (1) destiné à la circulation d'un liquide refroidi, un premier circuit hydraulique qui comprend un tuyau d'alimentation (7) pour contrôler la température de systèmes de distribution de boissons ou de machines-outils, ainsi que de services ménagers ou industriels (S), et un second circuit hydraulique pour contrôler la température dudit moteur électrique (1), **caractérisé en ce que** ledit second circuit hydraulique comporte un tuyau métallique en forme de U (8) qui est relié audit tuyau d'alimentation (7), est directement installé près du stator (12) dudit moteur électrique (1) et maintenu par adhérence audit stator (12) par des moyens adhérents (13).

2. Groupe motopompe selon la revendication 1, **caractérisé en ce que** lesdits moyens adhérents sont constitués d'une bride métallique (13) qui garantit une adhérence importante dudit tuyau en forme de U (8) audit stator du moteur (12), grâce à sa hauteur qui peut aller jusqu'à l'épaisseur totale du stator, ledit tuyau en forme de U (8) étant doté d'au moins deux développements (R1, R2) installés sur le même côté du stator (12) ou bien l'un d'un côté et l'autre du côté opposé.

3. Groupe motopompe selon la revendication 1 ou 2, **caractérisé par** des moyens de surinjection conçus pour couvrir sensiblement toute la surface dudit moteur électrique (1) afin de garantir une importante protection dudit moteur électrique (1) contre l'humidité ambiante et un silence de fonctionnement dudit groupe motopompe.
